# EUROPEAN PATENT APPLICATION

(11) **EP 3 499 019 A1**
(43) Date of publication of application: **19.06.2019**
(21) Application number: 17207823.0
(22) Date of filing: 15.12.2017
(51) Int. Cl.: F02N 19/10, B60K 15/03, B60K 13/04, B60K 11/02

(54) **HEATING METHOD FOR A TANK SYSTEM**

(71) Applicant: Plastic Omnium Advanced Innovation and Research, 1120 Bruxelles (BE)
(72) Inventor: LEONARD, Stéphane, B-1090 BRUSSELS (BE); DUEZ, Laurent, B-1180 UCCLE (BE)
(74) Representative: LLR

(57) **Abstract**

A method for heating a fluid (7) in a tank system (2), the tank system (2) comprising a controller (3), a thermal sensor (4), at least a first heating device (5) placed in a first area of the tank system and at least a second heating device (6) placed in a second area of the tank system, the method comprising the following steps:
a) An initial temperature of the fluid T_{f0} is determined by the thermal sensor (4) and is compared to a first set-point temperature Tₛₑₜ₁;
b) If the initial temperature of the fluid T_{f0} is inferior or equal to the first set-point temperature Tₛₑₜ₁, then the at least first heating device (5) is activated and heats during a first heating period ti and at a first heating power P₁;
c) After the at least first heating period ti, the first heating device (5) heats at a reduced power P_{1.1} which is inferior to the first heating power P₁;
d) The at least second heating device (6) is activated and heats during a second heating period t₂ and at a second heating power P₂;
e) After the second heating period t₂, the at least second heating device (6) heats at a reduced power P_{2.2} which is inferior to the second heating power P₂.

## Description

### Technical field of the invention

The present invention relates to a method and an assembly for heating a fluid in a tank system for a motor vehicle.

More specifically, the invention describes a method for heating a fluid in the case of a "cold-start" of a motor vehicle. A "cold-start" corresponds to a situation at the start of a motor vehicle when the fluid has a temperature that is equal to or below the freezing temperature of the fluid.

The present invention also relates to the control of heating devices, in particular in the case of an available power which is reduced, for example, when starting a motor vehicle.

The invention also relates to a tank system and a motor vehicle suitable for the application of the method.

### Background of the invention

A tank system for a motor vehicle generally comprises a heating system provided with at least one heating device for heating and/or liquefying the fluid contained in the tank system.

The fluid is aimed to be pressurized by a pump of the motor vehicle.

This kind of heating system is used to heat and/or defreeze the fluid contained in the tank system in the case of low external temperatures and a cold-start of the associated motor vehicle.

In these conditions, the fluid has a temperature that is equal to or below the freezing temperature of the fluid.

The freezing temperature being the temperature at which the fluid starts to freeze.

A problem with existing system is that at low temperatures, a fluid contained in a tank system tends to be partly or entirely frozen. Thus, the fluid is not immediately usable when the motor vehicle starts.

Another issue is that defrosted parts of the fluid can be trapped in pockets of ice or parts of the fluid that are still frozen. In these conditions, the associated tank system is not operational right off from the start of the motor vehicle or not at full capacity.

An additional problem is that the available power can be reduced, for example, when starting a motor vehicle. In this condition, the available power can be considered as insufficient in order to liquefy and/or defreeze the overall volume of the fluid in the tank system.

A pressurization of a large volume of fluid by a pump will not be possible in order to ensure the priming of the pump. The term "priming" corresponds to the priming of a tank system from a purged or partially purged state where the pump contains air to a state where a pressure is stabilized in the pump.

It is known practice to incorporate, into a tank system, elements such as a level sensor, a thermal sensor, a controller and one or several heating elements, etc.

Patent US 6,063,350 proposes, for example, to group these various elements together on the mounting plate of a pump comprised in a tank system and positioned on the upper wall of it.

Patent EP 2,262,986 B1 filed by applicant discloses a method for heating a urea component of a SCR (Selective Catalytic Reduction) system using resistive heating elements and also a SCR system suitable for the application of the described method. The method comprises different steps according to which:
a) the temperature (Tcpt) of the liquid in the component is determined and compared to a 1 st set-point (T0);
b) if the temperature (Tcpt) is greater than the 1st set-point (T0), step a) is repeated;
c) if the temperature (Tcpt) is less than or equal to the 1st set-point (T0), the heating device is actuated,
d) the time during which the heating device is actuated is measured and the heating device is stopped if this time is greater than a time t1;
e) the temperature (Tcpt) is determined after a time t2 and compared to a 2nd set-point (T1 with T1 >T0); if the temperature (Tcpt) is less than or equal to the 2nd set-point (T1) the heating device is actuated and step d) is repeated;
f) if the temperature (Tcpt) is greater than the 2nd set-point (T1), the heating device is stopped and step a) is repeated.

Thus the temperature of the urea is compared to different set-point temperatures enabling the passage from one step to another or the repetition of one step of the heating method. The achievement of one or several steps is associated with the actuation or deactivation of the heating device.

Thus, the document describes the use of only one heating device which does not permit an efficient distribution of the heat in the enclosed system.

Also, the herein described method is limited to the domain of SCR system and the application to a urea component.

Patent application EP 2,851,295 A1 describes a system and a method comprising:
- Receiving, by a controller from a temperature sensor, an indication of a measured temperature of a fluid flow; and
- Controlling, by the controller and based on a difference between the measured temperature of the fluid flow and a target temperature, operation of a first heater device, disposed within the fluid flow, via a first pulse width modulation signal and operation of a second heater device, disposed within the fluid flow, via a second pulse width modulation signal.

Thus, the patent application describes a method to control multiple heaters via pulse width modulation but which is limited to the application to a fluid in movement whereas the present invention concerns a fluid that can be understood as in a static position and contained in a tank system where the heating devices are placed.

Thus the conditions presented in the patent application are limited to restricted space and areas because it is applied to a fluid flow, for example, of an airflow duct. Therefore, the method described by the patent application is not adapted to the case of a fluid contained in a tank system in a cold-start situation where the initial temperature of the fluid can be negative or near 0°C.

Also the placement of the heating devices as described by the patent application, does not allow different configurations of placement of the heating devices in order to optimize an injection of a large volume of defrozen fluid by a tank system. The patent application describes the heating devices as disposed within a fluid flow.

### Summary of the invention

The present invention aims to solve the disadvantages of the prior art.

The method addresses the problems related to low temperatures and a cold-start of a motor vehicle. Thus, the method resolves the issue of heating a frozen fluid in a tank system.

More precisely, the invention describes a method to defreeze a fluid with a reduced available power. Thus, an object of the invention is the optimization of the available power with a method of pulsation of the heating devices.

The present invention is based on the idea of distributing the available power to at least a first heating device and at least a second heating device at different heating periods with also periods of reduced power which enable the creation and the propagation of a heat transfer in the entire volume of the fluid and the tank system.

An object of the invention is to propose a method to optimize the liquefaction of a fluid.

Another object of the invention is to resolve the above problem with a system that is compatible with several fluids such as water, an aqueous urea solution, fuel, etc.

An additional object of the invention is to avoid an overconsumption of the amount of available power transmitted to the heating devices of the tank system by operating the heating devices only at associated periods and not simultaneously. Thus, the method aims to spare power which is critical in automotive applications.

Also, the present invention aims to be compatible with several types and technologies of heating devices.

For this purpose, the invention relates to a method for heating a fluid in a tank system, the tank system comprising a controller, a thermal sensor and at least a first heating device placed in a first area of the tank system and at least a second heating device placed in a second area of the tank system, the method comprising the following steps:
a) An initial temperature of the fluid T_{f0} is determined by the thermal sensor and is compared to a first set-point temperature Tₛₑₜ₁;
b) If the initial temperature of the fluid T_{f0} is inferior or equal to the first set-point temperature Tₛₑₜ₁ then at least a first heating device placed in a first area of the heating device, is activated and heats for a first heating period t₁ and at a first power P₁.
c) After the first heating period t₁, the at least first heating device heats at a reduced power P_{1.2} which is inferior to the first heating power P₁;
d) At least a second heating device placed in a second area of the tank system, is activated and heats for a second heating period t₂ and at a second power P₂.
e) After the second heating period t₂, the at least second heating device heats at a reduced power P_{2.2} which is inferior to the second heating power P₂;

Thus, the controller receives information from the thermal sensor about the initial temperature of the fluid and is able to compare it to a first set-point temperature Tₛₑₜ₁ stored in the controller. The controller then interprets the result in order to activate or not the at least first heating device and so the following steps of the method.

Based on the interpretation of the initial temperature of the fluid T_{f0} by the controller, an amount of power from the available power is transmitted by the controller to the at least first heating device for a first heating period t₁. The amount of power from the available power transmitted to the at least first heating device corresponds to the first heating power P₁.

After the first heating period t₁, the at least first heating device heats at a reduced power P_{1.1} which is inferior to the first heating power P₁.

Then, an amount of power from the available power is transmitted by the controller to the at least second heating device for a first heating period t₂.

The amount of power from the available power transmitted to the at least second heating device corresponds to the second heating power P₂.

After the second heating period t₂, the at least second heating device heats at a reduced power P_{2.2} which is inferior to the second heating power P₂.

The heating period of a heating device can be specific to one heating device compared to one another or be equal for all the heating devices. Thus, the controller is able to define different configurations of the heating periods (t₁; t₂) for the at least first and the at least second heating devices.

According to an embodiment, the method comprises a first transition period t_{1'} between the end of the first heating period t₁ of the at least first heating device and the start of the heating period t₂ of the at least second heating device.

Thus, the method optimizes the homogenization of the temperature in the tank system after the heating of the at least first heating device and before the heating of the at least second heating device. So, the first transition period t_{1'} delays the heating of the at least second heating device.

According to a preferred embodiment, the first transition period t_{1'} is equal to zero.

Thus, the method enables to continue to dissipate heating immediately after the end of the first heating period t₁ via the at least second heating device.

According to one embodiment, a heating period associated to a heating device is defined by the controller on the area where the heating device is placed and/or the type of technology incorporated in the heating device in order to optimize the heating and/or defreeze of the fluid.

The periods of reduced heating power of the heating devices enable the propagation of a heat transfer in all the volume of the fluid and the tank system. Thus, the heat transfer has time to propagate to non-heated areas and heated areas of the fluid and the tank system while other heating devices are heating at full or reduced power. Thus, the heating transfer participates in the homogenization of the temperature of the fluid and the temperature of the interior of the tank system.

Also, the method optimizes the use of the available power at the start of the motor vehicle by avoiding a simultaneous activation at full power of the at least first and the at least second heating devices.

The method describes the use of a first set-point temperature Tₛₑₜ₁ that defines the activation time of the at least first heating device by the controller. The first set-point temperature Tₛₑₜ₁ also prevents that the activation of the at least first and the at least second heating devices when the liquid is injectable and, for example, not frozen.

Thus, the controller can determine that, based on the determination of the initial temperature of the fluid T_{f0} and its comparison to the first set-point temperature Tₛₑₜ₁, no activation of the at least first and the at least second heating devices is required.

According to a preferred embodiment, the method comprises also a step of determining a temperature of the fluid T_{f} step e). The temperature of the fluid T_{f} is determined and compared to a second set-point temperature Tₛₑₜ₂. If the temperature of the fluid T_{f} is inferior or equal to the second set-point temperature Tₛₑₜ₂, then step b) is executed.

Thus, if the temperature of the fluid T_{f} is superior to the second set-point temperature Tₛₑₜ₂ then the at least first heating device is deactivated and/or the at least second heating device is deactivated by the controller.

Thus, the controller re-executes the steps of the method, starting at step b), if the fluid in the tank system has not reached the second set-point temperature Tₛₑₜ₂. Thus, the method ensures that the at least first and the at least second heating devices will continue to heat until the second set-point temperature Tₛₑₜ₂ is reached.

The second set-point temperature Tₛₑₜ₂ is not a target temperature as for the global temperature of the fluid but is a parameter designed to evaluate the volume of defrozen fluid reached after the heating periods (t₁; t₂) of the at least first and the at least second heating devices. The second set-point temperature Tₛₑₜ₂ aims to save power if the temperature of fluid T_{f} is superior to this value.

The deactivation of the at least first and the at least second heating devices if the temperature of the fluid T_{f} is superior to the second set-point temperature Tₛₑₜ₂, enables to prevent the over-consumption of the power transmitted to the at least first and the at least second heating devices.

Thus the method is based on the thermal inertia of the fluid in the tank system and the optimization of the available power for the defreezing of the fluid via the creation and propagation of a heat transfer.

According to an embodiment, the temperature of the fluid T_{f} is determined during the steps b), c), and/or d) and at least once.

Thus, the controller checks at several times the temperature of the fluid T_{f}.

Also, the controller is able to collect and store data about the evolution of the temperature of the fluid T_{f}. Thus, the controller enables further evolutions of the method with different strategies based on the evolution of the temperature of the fluid T_{f}.

According to a further embodiment, if the temperature of the fluid T_{f} is superior to the second set-point temperature Tₛₑₜ₂, then the at least first heating device is deactivated and/or the at least second heating device is deactivated.

Thus, the controller is able to deactivate any of the at least first and second heating devices if the second set-point temperature Tₛₑₜ₂ is reached. Thus, the method avoids the over-consumption of the available power until the aimed temperature is reached. Thus, the method enables an efficient use of the at least first and the at least second heating devices and the available power. Also, the method allows a prolongation of the operating life of the at least first and the at least second heating devices by avoiding their over-use.

According to an embodiment, the method comprises a second transition period t_{2'} that is between the end of the second heating period t₂ of the at least second heating device and the start of the first heating period t₁ of the at least first heating device.

Thus, the second transition period t_{2'} delays the heating of the at least first heating device.

Therefore, the first and second periods of transition (t_{1'}; t_{2'}) enables the controller to have time to check the temperature of the fluid T_{f}. Thus, the method via the controller would avoid the activation of a heating device if the temperature of the fluid T_{f} is superior to the second set-point temperature Tₛₑₜ₂.

According to a further embodiment, the second transition period t_{2'} is equal to zero.

Thus, the method prevents the at least second heating device from getting too cold and losing efficiency in the propagation of a heat transfer. Therefore, the thawing of the fluid in the tank system is optimized.

Also, it enables to dissipate immediately additional heating via the at least first heating device after the end of the second heating period t₂ and in the case step b) is repeated because the temperature of the fluid T_{f} is not superior to the second set-point temperature Tₛₑₜ₂. According to a further embodiment, after the first heating period t₁, the at least first heating device heats at a reduced power P_{1.1} for a first reduced heating period t_{1.1} which is a predefined non-zero value.

Also, according to an embodiment, the first reduced heating period t_{1.1} is comprised between 0,01s and 1200s.

In a preferred embodiment, the first reduced heating period t_{1.1} is comprised between 2s and 120s.

Thus, the method is adaptable and takes into account the different thermal inertia of fluids and the different types of heating devices.

Thus, the method avoids the waste of the amount of the available power transmitted to the at least first heating device. Also, it enables a heating transfer to propagate to non-heated areas and to the rest of the volume of the tank system while the at least first and the at least second heating devices are heating or cooling off due to reduced powers (P_{1.1}; P_{2.2}). Therefore, the method participates to have the fluid remain at a temperature that is above the freezing temperature of the fluid.

According to an embodiment, after the second heating period t₂, the at least second heating device heats at a reduced power P_{2.2} or is deactivated for a second reduced heating period t_{2.2} which is a predefined non-zero value.

Also, according to an embodiment the second reduced heating period t_{2.2} is preferably comprised between 0,01s and 1200s.

In a preferred embodiment, the second reduced heating period t_{2.2} is comprised between 2s and 120s.

Thus, the method is adaptable and takes into account the different thermal inertia of fluids and the heating of different types of heating devices.

Thus, the method avoids the over-consumption of the amount of the available power transmitted to the at least second heating device. Also, it enables the creation a heating transfer and its propagation into the areas heated by the at least second heating device and the non-heated areas.

Therefore, the method ensures the homogenization of the temperature inside the tank system by diffusing heat in a larger area, especially when the at least second heating device heats at a reduced power P_{2.2}.

According to a preferred embodiment, the fluid is demineralized water.

Thus, the method is intended for a water tank system in a motor vehicle. This type of system has issues in the case of cold start of a motor vehicle or in the case where the fluid is frozen due to low external temperatures. The application of the method resolves these issues.

According to an embodiment, the first set-point temperature Tₛₑₜ₁ is a predefined temperature.

The first set-point temperature Tₛₑₜ₁ is to be understood as the temperature close to the freezing temperature at which the fluid starts freezing, specifically in the range of +0°C to +2°C from this theoretical temperature.

For example, the first set-point temperature Tₛₑₜ₁ can be in the range of 0°C to +2°C in the case of a tank system containing demineralized water.

In a preferred embodiment, the first set-point temperature Tₛₑₜ₁ is equal or superior to two Celsius degrees over the freezing temperature of the fluid.

For example, the first set-point temperature Tₛₑₜ₁ can be equal or superior to -9°c if the fluid is AdBlue®. Also, the first set-point temperature Tₛₑₜ₁ can be equal or superior to 2°C in the case the fluid is water.

According to an embodiment, the second set-point temperature Tₛₑₜ₂ is a predefined temperature.

According to a preferred embodiment the second set-point temperature Tₛₑₜ₂ is equal to or superior to five Celsius degrees over the freezing temperature of the fluid.

For example, the second set-point temperature Tₛₑₜ₂ can be equal or superior to 5°C if the fluid is demineralized water. Also, the second set-point temperature Tₛₑₜ₂ can be equal or superior to -6°C if the fluid is AdBlue®.

Thus, if the fluid is demineralized water and if the controller receives the information from the thermal sensor that the temperature of the fluid is above 5°C then the controller deactivates the first heating device and/or the second heating device.

The method is suitable for different fluids and set-point temperatures.

Thus, the method ensures that the fluid is in a liquid state at the end of the process which is the optimal condition for its use in the associated motor vehicle.

According to an embodiment, the first heating power P₁ is a predefined value and/or the second heating power P₂ is a predefined value.

According to a further embodiment, the first heating power P₁ is comprised between 0,1 % and 100% of the available power.

According to a preferred embodiment, the first heating power P₁ is comprised between 50% and 100% of the available power.

According to an embodiment, the second heating power P₂ is comprised between 0,1% and 100% of the available power.

According to a preferred embodiment, the first heating power P₂ is comprised between 50% and 100% of the available power.

Also, according to a further embodiment, the at least first and the at least second heating devices heats at a same heating power. Thus, the first heating power P₁ and the second heating power P₂ can be equal which simplifies the instructions of the controller to the at least first and the at least second heating devices.

According to another embodiment, the at least first and the at least second heating devices heat at a different heating power. Thus, the first heating power P₁ and the second heating power P₂ are not equal. The method adapts the reduced power to the placement of the heating device and the type of heating device in order to enable the creation and the propagation of a heating transfer.

According to an embodiment, first reduced power P_{1.1} is a predefined value and/or the second reduced power P_{2.2} is a predefined value.

In a preferred embodiment, the first reduced power P_{1.1} is comprised between 0% and 50% of the available power.

Thus, if the first reduced power P_{1.1} is equal to 0% of the available power then the first heating device is deactivated for a first reduced heating period t_{1.1} after the first heating period t₁. Therefore, the method enables to avoid the over-consumption of the available power.

In a preferred embodiment, the first reduced power P_{2.2} is comprised between 0% and 50% of the available power.

Thus, if the first reduced power P_{2.2} is equal to 0% of the available power then the second heating device is deactivated for a second reduced heating period t_{2.2} after the second heating period t₂. Therefore, the method spares the available power.

Also, according to a further embodiment, the at least first and the at least second heating devices heats at a same reduced power. Thus, the first reduced power P_{1.1} and the second reduced power P_{2.2} can be equal which simplifies the instructions of the controller to the at least first and the at least second heating devices.

According to another embodiment, the at least first and the at least second heating devices heat at a different reduced power. Thus, the first reduced power P_{1.1} and the second reduced power P_{2.2} are not equal. The method adapts the heating power to the placement of the heating device and the type of heating device.

According to an embodiment, the present invention describes a tank system comprising a controller, a thermal sensor, at least a first heating device placed in a first area of the tank system, at least a second heating device placed in a second area of the tank system and in accordance with the heating method detailed previously.

Thus, the invention provides a tank system suitable with the heating method and so able to effectively defreeze a fluid in the tank system in the case of a cold start.

Also, the tank system avoids an over-use of the at least first and the least second heating devices and enables a heating transfer to propagate between the heated areas and the non-heated areas. Thus, the tank system avoids a waste of the available power.

According to a further embodiment, the tank system comprises a pump and the first area is an area corresponding to the emplacement of the pump and the second area is an area out of the emplacement of the pump.

According to a preferred embodiment, the second area where is placed the second heating device is an area at a minimum distance of 15 mm from the pump.

Thus, the at least first heating device is placed in a first area which optimizes the defrozen volume of the fluid for the pump in order to have the most of the volume of the fluid pressurized by the pump.

Also, the at least second heating device is placed in a second area out of the emplacement of the pump, which enables the heating of a part of the volume of the fluid that is out of the reach of the heating of the at least first heating device.

In a preferred embodiment, the first area corresponds to the emplacement of the pump and the module.

The method ensures the priming of the pump by allowing a defrozen volume of the fluid to be available for the pump and its pressurization. Also, the integration of the pump in a module enables a simplified architecture and design for the tank system. The module also enables an easier integration of other components into the tank system. Therefore, the at least first heating device can be easily integrated into the tank system via the module.

Thus, the method takes advantage of the space constraints of a tank system and allows various configurations for the placement of the heating devices in order to optimize the volume of defrozen fluid at the end of the method.

According to a further embodiment, the tank system comprises a heating feedline corresponding to a third heating device.

Thus, this third heating device would be focused on heating the fluid contained in the feedline associated with the tank system.

According to a preferred embodiment, the thermal sensor is located at the bottom of the tank system.

Thus, the thermal sensor is ensured to be in immersion in the fluid even at low filling volumes of the fluid in the tank system.

According to an embodiment, the tank system comprises a module placed at the bottom of the tank system, and the thermal sensor is integrated into the module.

Thus, the integration of the thermal sensor into the tank system the method is facilitated. The design of the tank system is simplified with no constraints for the placement of the thermal sensor.

Also, the placement of the thermal sensor at the bottom of the tank system facilitates its mounting and incorporation into the tank system during or after its manufacturing process which can be, for example, by injection moulding, blow-moulding or by welding, machining operations, etc.

Thus, the method ensures that the thermal sensor is located in an area adapted and optimized for the initial temperature recording and that this temperature recording is the most accurate in order to transmit them to the controller which carries out the successive steps of the method. Also, the placement of the thermal sensor at the bottom of the tank system facilitates the determination of precise temperature data and ensures the immersion of the temperature sensor even at low filling volumes of the tank system.

Also, the mounting of the tank system would be easier because the module can incorporate other components such as the thermal sensor, etc. The placement at the bottom of the tank system ensures that components that need to be immersed would be in contact with the fluid once defrozen.

According to an embodiment, the present invention describes a motor vehicle with a tank system comprising a controller, a thermal sensor, at least a first heating device placed in a first area of the tank system, at least a second heating device placed in a second area of the tank system and in accordance with the heating method detailed previously.

Thus, the invention describes a motor vehicle avoiding the difficulties of a cold start situation by managing the available power with no overconsumption or waste and heating the volume of a fluid contained in a tank system. Also, the motor vehicle is able to defreeze a fluid in the tank system in the case the fluid is frozen due to low external temperatures.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices, systems and methods in this field, the present concepts are believed to represent substantial new and novel improvements, including departures from prior practices, resulting in the provision of more efficient, stable and reliable methods and devices of this nature.

### Brief description of the drawings

The above and other characteristics, features and advantages of the present invention will become apparent from the following detailed description, taken in conjunction with the accompanying drawings, which illustrate, by way of example, the principles of the invention. The reference figures quoted below refer to the attached drawings.
Fig.1 is a schematic representation of a preferred embodiment of a motor vehicle with a tank system comprising a temperature sensor, a controller, at least a first heating device placed in a first area and at least a second heating device placed in a second area.
Fig.2 is a flow chart of a first embodiment of the method according to the invention. It describes the main steps of the method applied to a tank system comprising a controller, a thermal sensor and at least a first heating device placed in a first area of the tank system and at least a second heating device placed in a second area of the tank system.
Fig.3 is a flow chart of a second embodiment of the method according to the invention with an additional step where the temperature of the fluid is determined after the second heating period.
Fig.4 is a schematic representation of an embodiment of a motor vehicle with a tank system containing water and comprising a temperature sensor, a controller, a module, a pump, at least a first heating device placed in a first area and at least a second heating device placed in a second area.
Fig.5 discloses a graph representing simulations of the evolution of the defrozen volume of a solution of demineralize water that is initially frozen in the tank system disclosed by Fig.4.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms "first, second" and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the method according to the invention. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

The term "tank system" is understood to mean an impermeable tank that can contain fluid such as water, an aqueous urea solution or fuel under diverse and varied environmental and usage condition. An example of such a tank system is that with which motor vehicle is equipped.

The tank system according to the invention is preferably made of plastic. The term "plastic" means any material comprising at least one synthetic resin polymer (i.e. its wall is principally made of plastic).

Any type of plastic may be suitable. Particularly suitable are plastics that belong to the category of thermoplastics.

The term "thermoplastic" is understood to mean any thermoplastic polymer, including thermoplastic elastomers as well as blends thereof. The term polymer is understood to mean both homo- and copolymers (especially binary and ternary copolymer). Examples of such copolymers are, without being limited to, random copolymers, linear block copolymers, other block copolymers and graft copolymers.

The wall of the tank system may be composed of a single thermoplastic layer, or of several layers.

One or more other possible additional layers may, advantageously, be composed of layers made of barrier material to liquids and/or gases, especially in the case the fluid in the tank system is fuel or gasoil. Preferably, the nature and thickness of the barrier layer are chosen so as to minimize the permeability of liquids and gases in contact with the internal surface of the tank system. Preferably, this layer is based on a barrier resin, that is to say a resin that is impermeable to the liquid such as, for example, EVOH (a partially hydrolyzed ethylene/vinyl acetate copolymer). Alternatively, the tank system may be subjected to a surface treatment (fluorination or sulfonation) for the purpose of making it impermeable to the liquid.

The barrier layer is not necessary to ensure permeability in the case the fluid is water, an aqueous urea solution or diesel, etc.

The term "fluid" is understood to mean a substance, as a liquid, that is capable of lowing and that changes its shape at a steady rate when acted upon by a force tending to change its shape. In a preferred embodiment, the fluid is demineralized water but the method is also adapted for an aqueous urea solution or fuel, etc. Thus, the method is not restricted to one type of fluid.

The term "aqueous urea solution" refers to a solution with solid urea dissolved into water, for example, a commercially available solution AdBlue® contains 32.5% in weight of urea.

The term "thermal sensor" is understood to mean a device that detects temperature and in the present invention, is set to collect temperature data and transfer them to the controller.

The term « heating device » is understood to mean a device or system for supplying heat. One object of the method is to be adapted for a large range of technologies of heating device. Depending on their technology and their configuration in the tank system, each of the heating device necessitate to heat for a heating period at a heating power in order to have an impact on the defrozen volume of fluid. This impact on the defrozen volume also depends on the fluid, its volume and properties.

For example, a fluid with a high calorific capacity will require a higher power to be defrozen than a fluid with a low calorific capacity in a same period of time.

In a preferred embodiment, the heating devices can be flexible resistive heaters in elastomer or tubular resistive heaters.

The term "controller" is understood to mean a device that can interpret the data collected by the thermal sensor and execute instructions. The device can receive the temperature information of the fluid via the thermal sensor and act upon the alimentation of the at least first and the at least second heating devices, stopping them when the required set-point temperature is reached or after step e) of the method.

The device is responsible for the transmission of an amount of the available power to the at least first and the at least second heating devices constituting their heating powers (P₁; P₂) and reduced powers (P_{1.1}; P_{2.2}). It also defines their heating periods (t₁; t₂) and reduced heating periods (t_{1.1}; t_{2.2}).

Also, the controller stores the predefined values that can be modified in function of the fluid in the tank system and/or the type and configurations of the at least first and the at least second heating devices integrated to the tank system.

The controller is not restricted in terms of data storing and could also store information about the defrozen volume of fluid in the tank system in function of time or the time needed for the complete thawing of the fluid in function of the type of fluid in the tank system.

The term "module" is understood to mean a device which comprises a thermal sensor and a pump in order to pressurize the defrozen fluid. The module is also understood to mean a device which can be linked to a feedline of a motor vehicle.

The term 'feedline" is understood as a line which connects at least one injector of a motor vehicle to the tank system and/or to a module comprised in the tank system. Thus, the feedline connects the tank system to another system of the motor vehicle.

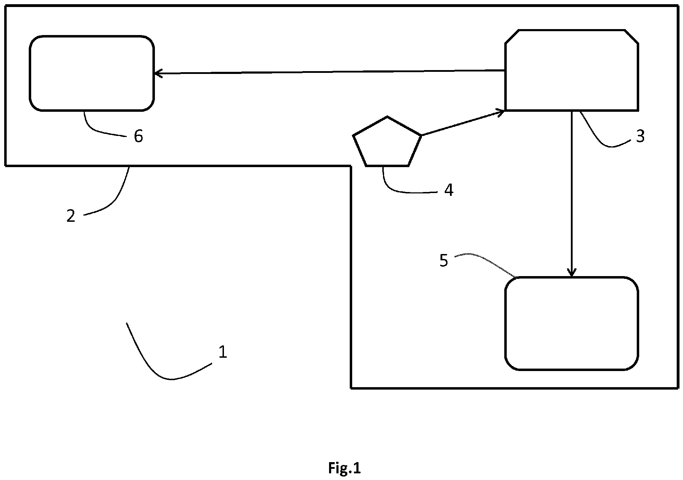

Fig.1 is a schematic top view of an example of a tank system (2) in a motor vehicle (1) according to the invention. The tank system (2) comprises at least a first heating device (5) located in a first area of the tank system (2), at least a second heating device (6) in a second area of the tank system (2), a controller (3) and a thermal sensor (4).

The thermal sensor (4) collects the initial temperature data and transmits them to the controller (3) which compares them to the set-point temperatures (Tₛₑₜ₁, Tₛₑₜ₂) that are stored in. Based on the result of the comparisons, the controller (3) activates or deactivates the at least first heating device (5) and/or the first heating device (6).

The controller is also able to transmit an amount of the available power to the at least first and the at least second heating devices in order to establish their heating powers (P₁; P₂) and reduced powers (P_{1.1}; P_{2.2}).

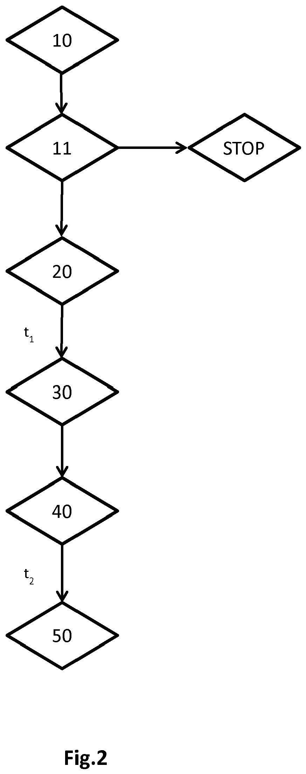

Fig.2 discloses a flow chart of the main steps of the method in a tank system comprising a controller, a thermal sensor and at least a first heating device placed in a first area of the tank system and at least a second heating device placed in a second area of the tank system.

At a first step (10), the controller determines an initial temperature T_{f0} of the fluid in the tank system and the initial temperature T_{f0} is compared to a predetermined first set-point temperature Tₛₑₜ₂ (11).

If the initial temperature of the fluid T_{f0} is inferior or equal to the first set-point temperature Tₛₑₜ₁ (11), then the at least first heating device is activated and heats during a first heating period t₁ and at a first heating power P₁ (20).

At the end of the first heating period t₁, the first heating device heats at a first reduced power P_{1.1} for a first reduced heating period t_{1.1}. In this embodiment of the method, the first reduced power P_{1.1} is equal to zero and thus the first heating device is deactivated for a first reduced heating period t_{1.1} (30).

After the deactivation of the at least first heating device, the at least second heating device is activated and heats during a second heating period t₂ and at a second heating power P₂ (40).

At the end of the second heating period t₂, the at least second heating device heats at a first reduced power P_{2.2} for a second reduced period t_{2.2}. In this embodiment of the method, the second reduced power P_{2.2} is equal to zero and thus the second heating device is deactivated for a second reduced heating period t_{2.2} (50).

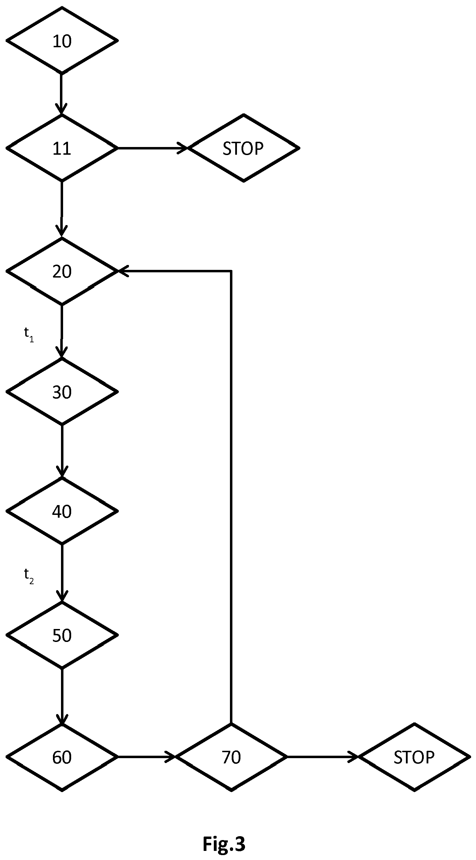

Fig.3 discloses a schematic illustration of a preferred embodiment of the method wherein the first and second reduced power (P_{1.1}; P_{2.2}) are equal to zero resulting into the deactivation of the at least first and the least second heating devices after their heating periods (t₁; t₂). It also discloses that after the deactivation of the at least second heating device (50), a temperature of the fluid T_{f} is determined and compared to a second set-point temperature Tₛₑₜ₂.

If the temperature of the fluid T_{f} is inferior to the second set-point temperature, then the controller executes step b) (20) and then carries out the following steps of the method in order to have the fluid at a temperature of the fluid T_{f} that is superior to the second set-point temperature Tₛₑₜ₂.

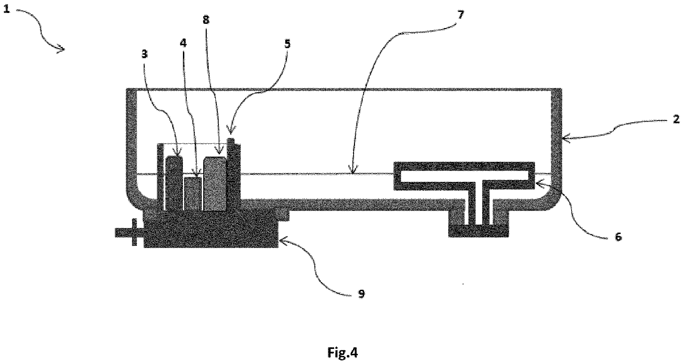

Fig.4 is a schematic side-view of an example of an interior of a tank system (2) containing a fluid (7), in a motor vehicle (1) according to an embodiment of the invention.

The fluid (7) is demineralized water. The tank system (2) comprises a controller (3), a thermal sensor (4), a first heating device (5) located at the emplacement of the pump (8) and the module (9). The first heating device (5) corresponds to a flexible heater in this embodiment.

The second heating device (6) is placed in a second area external to the pump (8) and the module (9).

The second heating device (6) is in contact with the fluid (7) contained in the tank system (2). Also, the second heating device (6) corresponds to a tubular resistive heater.

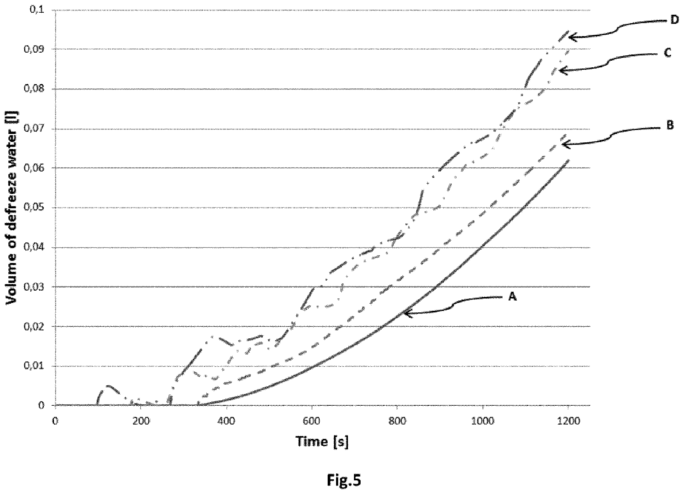

Fig.5 discloses a graph representing different curves of simulation of the evolution of the defrozen volume of a solution of demineralized water in a tank system such as the tank system disclosed by Fig.4.

Thus, the demineralized water is heated by a first and second heating devices comprised in the same tank system as the demineralized water. The tank system also comprises a controller which orders the activation or deactivation of the first and the second heating devices.

The initial temperature of the fluid T_{f0} is -15°C and the first set-point temperature Tₛₑₜ₁ was predefined at 0°C because the fluid is demineralized water. The available power in all simulations is set at 125W. The second set-point temperature Tₛₑₜ₂ was predefined at 5°C because the fluid is demineralized water. The simulations lasted for twenty minutes approximatively in order to reach a temperature of the fluid that is superior to the second set-point temperature Tₛₑₜ₂.

The curves of simulation are distinguished in two categories: the curves of application (B; C; D) where an embodiment of the method described by the present invention is applied and the curve of reference (A) where the method described by the present invention is not applied.

In the curves of application (B; C; D) and the curve of reference (A), a same heating power is allocated for both the first and the second heating devices.

Also, the curves of simulations (B; C; D) refer to an embodiment of the invention wherein, the reduced powers of the first and second heating devices are equal to zero and the period of reduced power is equal to their heating period. Thus, after their associated heating period, the first and second heating devices are deactivated for a first period and a second period of reduced heating power.

At the end of a heating period, the heating device that is heating is deactivated for a period of reduced heating which is equal to the heating period and the available power is transferred to the other heating device which then starts to heat.

The curve of reference (A) represents a situation of reference where the first and the second heating devices are simultaneously heating the fluid with an equal repartition of the available power which is 125W. Thus, the first and second heating devices are each heating the fluid with a heating power of 62.5W with no period of reduced power for both heating devices.

The curves of application (B; C; D) refer to simulations where the repartition of the available power to the first and second heating devices is different from one simulation to another.

The first curve of application (B) represents a simulation where the available power of 125W is alternatively allocated to the first heating device for a heating period of 5s then the first heating device is deactivated for a period of reduced power equal to 5s and the available power is transferred to the second heating device for the same heating period.

The second heating device is then deactivated for a period of reduced heating equal to 5s and the available power is redirected to the first heating device for the continuation of the alternatively heating.

The second curve of application (C) represents a simulation where the available power of 125W is alternatively allocated to the first heating device for a heating period of 60s then the first heating device is deactivated for a period of reduced heating equal to 60s and the available power is transferred to the second heating device for the same heating period.

The second heating device is then deactivated for a period of reduced heating equal to 60s and the available power is redirected to the first heating device for the continuation of the alternatively heating.

The third curve of application (D) represents a simulation where the available power of 125W is alternatively allocated to the first heating device for a heating period of 120s then the first heating device is deactivated for a period of reduced heating equal to 120s and the available power is transferred to the second heating device for the same heating period.

The second heating device is then deactivated for a period of reduced heating equal to 120s and the available power is redirected to the first heating device for the continuation of the alternatively heating.

Thus the curves of application (B; C; D) demonstrate an increase of the volume of defrozen water compared to the curve of application (A). The curves (C; D) present peaks of defrozen volume which can be explained by the period of reduced heating of each heating device enabling the creation and the propagation of a heating transfer in all the volume of the tank system.

Thus, the water contained in the tank system defreezes more rapidly than in the case of the curve of reference (A).

Thus, an alternatively heating of the fluid with periods of reduced power is able to defreeze a larger volume of water than a simultaneous heating of the two heating devices in the same period of time.

Therefore, the method enables to reach better performances in terms of defrozen volume and time which are required in a cold-situation and/or in low power conditions.

## Claims

1. A method for heating a fluid (7) in a tank system (2), the tank system (2) comprising a controller (3), a thermal sensor (4), at least a first heating device (5) placed in a first area of the tank system and at least a second heating device (6) placed in a second area of the tank system, the method comprising the following steps:
a) An initial temperature of the fluid T_{f0} is determined by the thermal sensor (4) and is compared to a first set-point temperature Tₛₑₜ₁;
b) If the initial temperature of the fluid T_{f0} is inferior or equal to the first set-point temperature Tₛₑₜ₁, then the at least first heating device (5) is activated and heats during a first heating period t₁ and at a first heating power P₁;
c) After the at least first heating period t₁, the first heating device (5) heats at a reduced power P_{1.1} which is inferior to the first heating power P₁;
d) The at least second heating device (6) is activated and heats during a second heating period t₂ and at a second heating power P₂;
e) After the second heating period t₂, the at least second heating device (6) heats at a reduced power P_{2.2} which is inferior to the second heating power P₂.

2. Heating method according to claim 1, wherein after step e), a temperature of the fluid T_{f} is determined and compared to a second set-point temperature Tₛₑₜ₂, and if the temperature of the fluid T_{f} is inferior or equal to the second set-point temperature Tₛₑₜ₂ then step b) is executed.

3. Heating method according to claim 2, wherein the temperature of the fluid T_{f} is also determined during the steps b), c) and/or d) at least once.

4. Heating method according to claim 3, wherein if the temperature of the fluid T_{f} is superior or equal to a second set-point temperature Tₛₑₜ₂ then the at least first heating device (5) is deactivated and/or the at least second heating device (6) is deactivated.

5. Heating method according to one of the previous claims, wherein the at least first heating device (5) heats at a reduced power P_{1.1} for a first reduced heating period t_{1.1} after the first heating period t₁ which is a predefined non-zero value.

6. Heating method according to one of the previous claims, wherein the at least second heating (6) device heats at a reduced power P_{2.2} for a second reduced heating period t_{2.2} after the second heating period t₂ which is a predefined non-zero value.

7. Heating method according to one of the previous claims, wherein the fluid (7) is a solution of demineralized water.

8. Heating method according to one of the previous claims, wherein the first set-point temperature Tₛₑₜ₁ is a predefined temperature.

9. Heating method according to claim 2 or 4, wherein the second set-point temperature Tₛₑₜ₂ is a predefined temperature.

10. Heating method according to one of the previous claims, wherein the first heating power P₁ is a predefined value and/or the first heating power P₂ is a predefined value.

11. Heating method according to one of the previous claims, wherein the first reduced power P_{1.1} is a predefined value and/or the second reduced power P_{2.2} is a predefined value.

12. Tank system (2) comprising a controller (4), a thermal sensor (3), at least a first heating device (5) placed in a first area of the tank system, at least a second heating device (6) placed in a second area of the tank system (2) and using the method according to claims 1 to 11.

13. Tank system (2) according to claim 12, wherein the tank system (2) comprises a pump (8) and in that the first area is an area corresponding to the emplacement of the pump (8) and the second area is an area out of the emplacement of the pump (8).

14. Tank system (2) according to claim 12 or 13, wherein the thermal sensor is located at the bottom of the tank system (2).

15. Motor vehicle (1) comprising a tank system (2) according to any of claims 12 to 14.
